Europäisches Patentamt

European Patent Office

Office européen des brevets

(11) Publication number: **0 207 376**
A2

(12) # EUROPEAN PATENT APPLICATION

(21) Application number: **86108336.8**

(22) Date of filing: **19.06.86**

(51) Int. Cl.⁴: **G 07 F 7/10**

(30) Priority: **03.07.85 DK 3047/85**

(43) Date of publication of application:
**07.01.87 Bulletin 87/2**

(84) Designated Contracting States:
**CH DE FR GB IT LI NL SE**

(71) Applicant: **CNE A/S**
**13, Ejlskovsgade**
**DK-5000 Odense C(DK)**

(72) Inventor: **Ravnkilde, Erik**
**93, Rasmus Rask Alle**
**DK-5250 Odense SV(DK)**

(74) Representative: **Weickmann, Heinrich, Dipl.-Ing. et al,**
**Patentanwälte Dipl.-Ing. H.Weickmann Dipl.-Phys.Dr.**
**K.Fincke Dipl.-Ing. F.A.Weickmann Dipl.-Chem. B. Huber**
**Dr.-Ing. H. Liska Dipl.-Phys.Dr. J. Prechtel Möhlstrasse 22**
**D-8000 München 80(DE)**

(54) **Data carrier and system comprising a vending terminal for the data carrier.**

(57) In order to improve precautions for preventing unautho-
rized use of a data carrier, e.g. a credit card, it is suggested that
the data carrier (30) between its data input (11) and its data
output (10) comprises an encryption module (15), in which the
encoded data is encrypted before read out again.

Fig.4

EP 0 207 376 A2

1

### Title: Data carrier and system comprising a vending terminal for the data carrier.

The present invention relates to a data carrier for use in a vending terminal, e.g. for a delivery machine, with built-in precautions to prevent unauthorized use of the data carrier, said precautions comprising an encryption in the vending terminal of the data stored on the data carrier.

It is well-known to encrypt data, e.g. in connection with use of credit cards. Thus, British Patent Application No. 2,131,586 discloses a system comprising an encryption module garbling the data transferred to or from a card. In the known systems all encryption is performed in the system itself, but on the contrary not in the card or the data carrier.

It is the object of the present invention to provide a data carrier, which cannot be misused by copying data stored in a similar data carrier.

According to the invention it is suggested that between its data input and its data output the data carrier comprises an encryption module, in which at least part of the encoded data is encrypted before read out on the data output and before or after storage in the memory of the data carrier. As a result it is made even more difficult to misuse the data carrier. A given data carrier can consequently only be used in a vending terminal with corresponding encryption means. Attemps of changing the value of the data carrier in an unauthorized

2

manner will imply that the registered data is not accepted in a vending terminal corresponding to the data carrier, and most probably not in similar terminals for data carriers of the same type either.

The encryption module is a logic network defining and performing the encryption of the encoded data. The encryption module may be a socalled threade⌐ network realizing one or several mathematic algorithms or functions. In a particularly simple embodiment the encryption is merely a division or multiplication by a factor two. Consequently, the encryption is merely a displacement of the data information by one bit.

The data carrier according to the invention has to be power supplied, and the power supply may be a battery cell in the data carrier, but is preferably a combination of a voltage stabilizing circuit and power-receiving means receiving power from the vending terminal, into which the data carrier is inserted. The power-receiving means are a coil surrounding a hole in the data carrier, said hole being adapted to receive a retainer means forming part of the vending terminal and being adapted to ensure the securing of the data carrier in the vending terminal during a data transaction, said retainer means being made of a magnetically conducting material and forming part of a magnetic circuit, said magnetic ciruit being capable by induction to transfer energy from the vending terminal to the data carrier. A simple, reliable power supply is thus provided with a neglectable weight and without having to be replaced or recharged.

3

The data carrier can advantageously be constructed as a card, which is easy to keep and easy to insert into a vending terminal and for which retainer means can easily be adapted. The data carrier further possesses the advantage that the large surface of the card facilitates the creation of a strong capacitive coupling between the data input and data output of the card and the corresponding data output and data input of the vending terminal.

In another embodiment the data carrier may be constructed as a cylinder or as a key, e.g. as a rectangular parallepipidum. Such a rectangular parallepipidum could simultaneously be a key appendage.

A vending terminal for a data carrier according to the invention comprises retainer means capable of supplying power to the data carrier and comprising one or several encryption modules, in which the data read out from the data carrier and/or the data to be encoded into the data carrier is encrypted to provide data for the original information for further processing in data processing means in the vending terminal.

The invention will be described more detailed below with reference to the accompanying drawing, in which

FIG. 1 illustrates an embodiment of a data carrier according to the invention and an associated vending terminal,

FIG. 2 illustrates a second embodiment of a data carrier according to the invention and an associated

4

vending terminal,

FIG. 3 illustrates an embodiment of the data carrier shown in FIG. 1,

FIG. 4 is a block diagram of an embodiment of a data carrier and a vending terminal according to the invention,

FIG. 5 is a block diagram of a vending terminal and a data carrier according to the invention in another embodiment, and

FIG. 6 is a block diagram of an alternative embodiment of the data carrier.

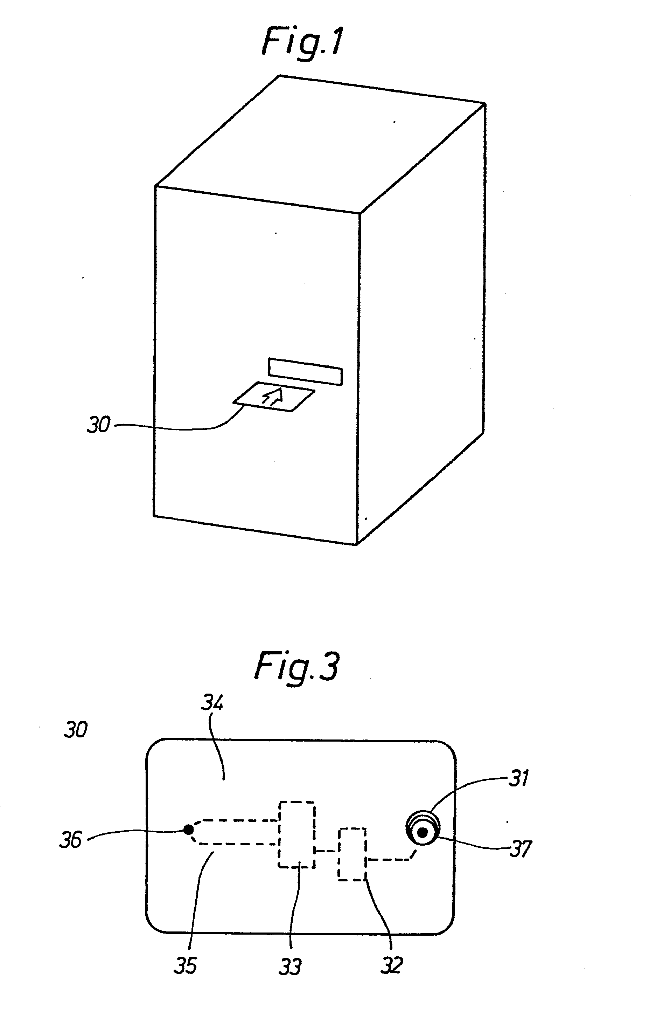

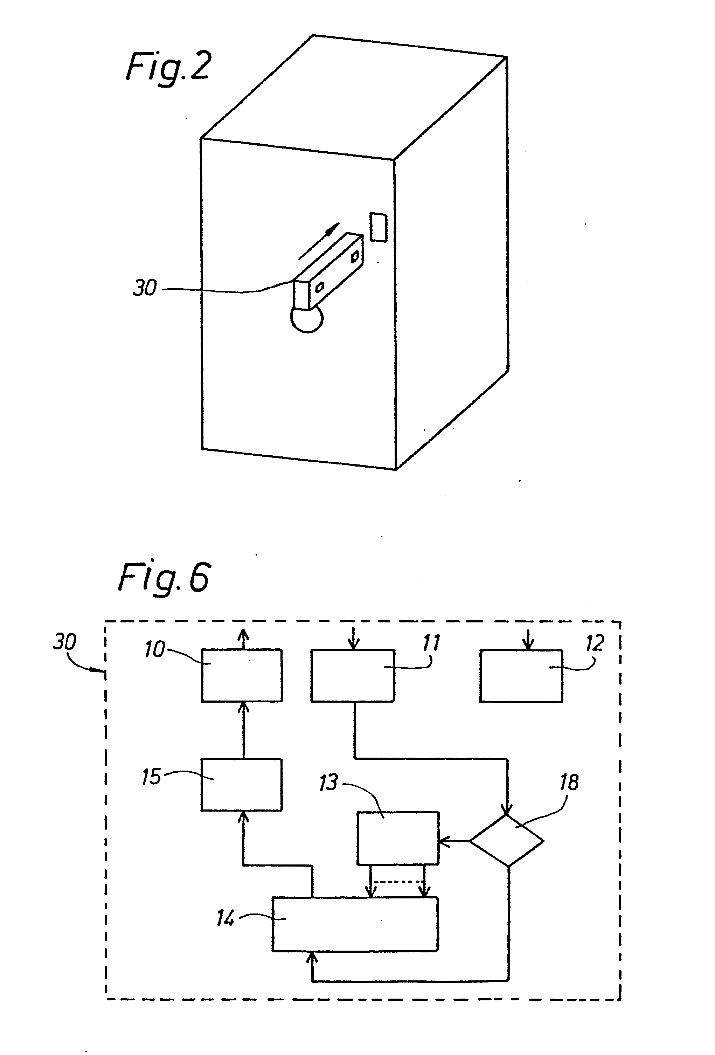

The data carrier may have the size of a credit card 30 for insertion into the terminal 40 as illustrated in FIG. 1. The terminal is a vending terminal, e.g. for a delivery machine, such as a coffee machine, and the terminal contains a socalled master module 50 receiving data from the card 30 through a data connector 40 and controlling a sales transaction.

FIG. 2 illustrates the data carrier in another embodiment, wherein the data carrier is constructed as a rectangular parallepipidum having e.g. the following dimensions 5 cm x 2 cm x 1/.2 cm. The data carrier is preferably constructed with two through-going openings, which may be circular, square or of any other suitable cross-section. These openings are utilized by a retaining system in the terminal.

5

The data carrier contains an integrated circuit in the form of a socalled "chip". The data carrier may have many different shapes. One of this variety of embodiments will be described below.

FIG. 3 illustrates a preferred embodiment, in which the data carrier is constructed as a card. The card contains a coil 31, a voltage supply 32, a chip 33, a capacitive transmitter 34 and a capacitive receiver 35 as well as two holes 36 and 37.

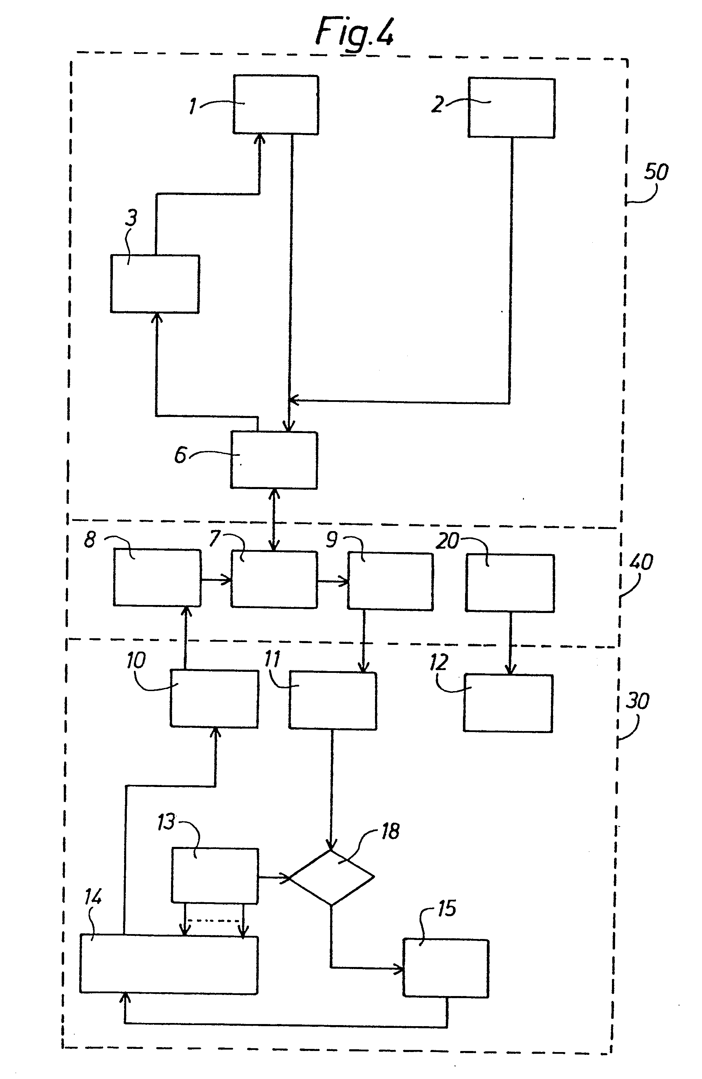

FIG. 4 illustrates a block diagram of a preferred embodiment of the electronic circuits on the card and the vending terminal comprising the data connector 40 and the master module 50.

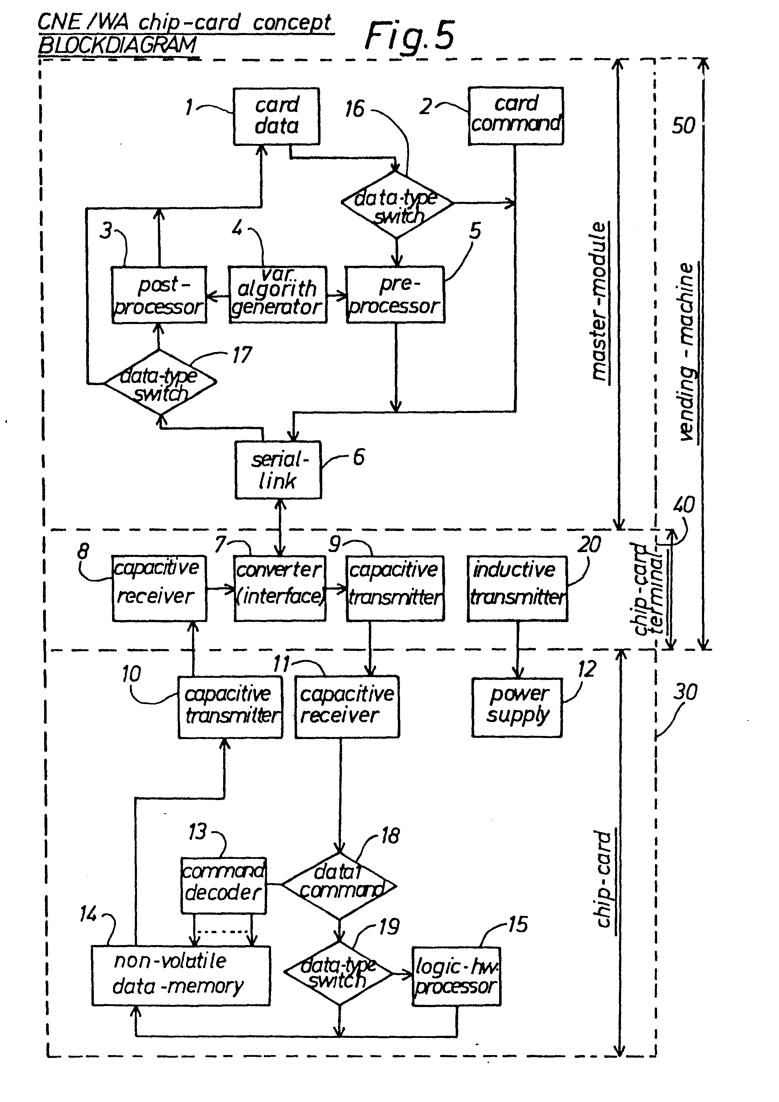

The circuit on the card 30 contains a signal output 10 and a signal input 11. The signal input 11 is connected to a switch circuit 18 capable of distinguishing between signals representing commands and signals representing data. The command signals are retransmitted to a command decoder 13 controlling a permanent memory 14. The data signals are transmitted into a logic network 15, which may be a socalled "logic hardware-processor". Said data is encrypted in this network. The output of the logic network 15 is connected to the memory 14, in which the encrypted data is stored. In an alternative embodiment illustrated in FIG. 5 an additional switch 19 is provided between the switch 18 and the logic network 15, said additional switch called "data-type switch" being capable of distinguishing between different types of data, so that only certain types of data are transmitted through

6

the logic network, in which they are encrypted. In this alternative embodiment illustrated in FIG. 5 some data is transmitted directly into the memory 14.

In an alternative embodiment illustrated in FIG. 6 the encryption module 15 is connected between the output of the memory 14 and the data transmitter 10, so that all data read out is encrypted.

In the embodiments illustrated in FIGS. 4 and 5 the master module 50 is built as illustrated in the block diagram, where blocks 1-6 (and 16-17) form part of an intelligent unit, preferably a microcomputer, and all data communication to and from the card is controlled from here. The blocks 7, 8, 9, and 20 constitute the data connector 40 creating a connection between the card 30 and the master module 50 during a data transaction. The terminal is adapted to retain the card, e.g. as described in Danish Patent Application No. 1465/81, by two pins or similar retainer means being capable of being inserted through two holes in the card.

A short description is given below of the individual blocks, their function and some of their characteristics. It is emphasized that the blocks concerned may also be used in connection with a data carrier of another shape than the card, e.g. a kind of key.

Block 1 designates card data, e.g. the data to be transferred to the card or the data just read out from the card. Block 2 is a card command, i.e. a command signal to be transferred to a card for controlling the flow of data to and from the memory 14, e.g. with the purpose of writing, reading or deleting data.

Block 3 is a logic function, preferably implemented a software-processor controlled by a variable algorithm, as it is defined in block 4, and the logic function in block 3 called "post"-processor forms part of an arithmetic chain together with another two functions, defined in blocks 5 and 15, which in combination encrypt the card data to and from the memory 14 of the card. The logic functions will be described more detailed below.

Block 4 is a variable algorithm generator controlled by two of the above three functions in the arithmetic chain. This block enables a change of the encryption. The block 4 may be omitted in an alternative embodiment of the master module. A master module with a permanent encryption will then be obtained.

Block 5 is also a logic function called "pre"-processor and defines a function forming part of the arithmetic chain. The "pre"-processor in block 5 is also controlled by the variable algorithm generator in block 4.

Block 6 is a serial link converting the flow of data and the flow of commands between the master module and the card 30 from parallel to serial form and vice versa.

8

Block 7 is an interface circuit converting the serial flow of bits from the master module to a form transmittable through a capacitive transmitter in block 9 to the card. Block 7 converts in a similar manner the serial flow of bits from block 8 in the terminal to block 6 in the master module.

Block 8 is a capacitive receiver, which through a capacitive coupling receives data signals in the form of a serial bit pattern from the card. The bit pattern received is retransmitted as a digital signal to block 7.

Block 9 is a capacitive transmitter transmitting data in the form of a serial bit pattern to the card. All data is transmitted serially and asyncronous by means of start and stop bits.

The card data is transmitted through a capacitive transmitter in block 10. In this block serial output data from the memory 14 is converted into a serially asynchronous signal, which dependent on a command from the master module is transmitted to block 8 in the vending terminal.

Block 11 is a capacitive receiver which receives serial data from block 9 in the vending data connector and converts this data into a digital signal retransmitted to block 18.

It is within the scope of the present invention to form the data transmitters and receivers in blocks 8, 9, 10, and 11 differently. The capacitive coupling between transmitter and receiver is particularly advantageous, when the data carrier is in the form of a card. Other coupling forms may be more expedient in other embodiments of the data carrier. A direct branch connection may e.g. be provided with contact means on the data carrier and the data connector, respectively, or an inductive coupling may be provided between the data carrier and the data connector.

Block 12 is a voltage supply supplying regulated supply voltage to all components on the card. The power necessary for this is supplied from block 20 in the vending data connector. The power is preferably transferred by induction. In the embodiment illustrated in FIG. 3 a coil 31 is provided round the hole 37. When the card has been inserted into the vending data connector, the card is secured by two retainer means projecting through the holes 36 and 37. The retainer means through the hole 37 must be of a magnetically conduction material, e.g. iron, and must form part of a magnetic circuit, such as the iron core in a transformer, so that the coil 31 forms a secondary winding on the transformer. Consequently the card is capable of tapping energy from the voltage supply of the terminal as long as the card is in the terminal. Alternatively the card may of course be provided with a battery cell.

Block 13 decodes commands transferred to the card via blocks, 18, 11, 9, 7, 6 from block 2. On the basis of these commands block 13 controls the flow of data in the memory, block 14.

Block 14 is the memory of the card, which has to be of the non-volatile kind, i.e. of the kind maintaining all data, even if the circuit is not supplied with power. This is essential, the card only being power supplied when located in the terminal. Part of the memory must be of the type, which cannot be deleted, i.e. corresponding to a ROM or PROM. It is necessary that the remaining part of the memory can be deleted electrically and can be programmed and may e.g. be an EEPROM.

Block 15 is a logic network, also called a logic processor, and may be a socalled hardware-processor, with a constant logic function forming part of the above mentioned arithmetic chain. The encryption of data is performed in this block.

Block 19 is a switch means called a data-type switch, which dependent on the data type of the current card data conducts these data through the encryption module or bypasses it. Corresponding data type switches are provided in blocks 16 and 17. The data type switch is only illustrated in the embodiment of FIG. 5.

Block 18 is a switch able to distinguish between commands and data and conducts commands to block 13 and data to block 19.

Block 20 is the magnetically conducting retainer means supplying the power supply 12, 32 of the card with power.

The uses and function of the card will be described

11

more detail below. Information divisible into permanent information and variable information are stored in the card memory 14. The permanent information comprises an identification code and a card number, whereas the variable information contains an amount code and a security code. The security code is a combination of the amount code and part of the permanent information. The permanent information is of course in non-changeable part of the memory 14, i.e. the ROM or PROM part. If an attempt is made to encode new data for a larger amount in a card by utilizing the corresponding data in another just revaluated card, such an attempted fraud can be exposed, the security code being incorrect. To render fraud even more difficult, the data encoded into the card before storage in the memory 14 are encrypted. The encryption is performed by means of a logic function built into the logic network 15. In a particularly simple embodiment the logic function is a division or a multiplication by a factor two, which corresponds to the binary data being displaced one place to the right or to the left. Many other logic functions are of course possible. The data derives from the master module of the vending terminal, and an encryption is performed already on this state, where data is conducted from the master module, viz. as indicated in block 5 in the socalled preprocessor. Another encryption of the data entered from the card to the master module can be performed in a corresponding manner as indicated in FIG. 4 in block 3 in the socalled post-processor.

Only the blocks illustrated in FIG. 4 form part of

12

a preferred and simplified embodiment. In this particularly simple embodiment all data is encrypted in the logic network 15, and all data undergoes an inverted encryption in block 3 in the master module.

In the more general embodiment illustrated in FIG. 5 the encryption can be changed by changing block 4 deciding which logic functions should be realized in blocks 3 and 5. If the function in block 3 is designated F1, the function in block 5 designated F2 and the function in block 15 designated F3, it applies that F1 + F2 + F3 + - 1, which means that the three functions together neutralize each other, or in other words F3 (F2 (F1 (data))) - data. By means of a vending terminal of the type illustrated in FIG. 5 it will e.g. be possible at a given time to cancel all previously issued data carriers by chaning the algorithm generator in block 4 and issued new data carriers to the vending terminal.

Corresponding vending terminals may be adapted to add value to the data carriers on payment of an amount. A standard value can alternatively be added to the data carriers by the supplier, whereafter they are bought by or delivered to the users.

Although the data carrier in the above has often been referred to as a card it must be clear that the data carrier may be of many different shapes, and the invention is in no way restricted to a card.

Such a data carrier may be used in connection with many different data transactions, in particular, but not exclusively, bargain, sales or payment

13

transactions .

14

Claims:

1.    A data carrier for use in a vending terminal, e.g. for a delivery machine, with built-in precautions to prevent unauthorized use of the data carrier, said precautions comprising an encryption in the vending terminal of the data stored on the data carrier, c h a r a c t e r i s e d in that between its data input (11) and its data output (10) the data carrier (30) comprises an encryption module (15), in which at least part of the encoded data is encrypted before read out on the data output (10) and before or after storage in the memory of the data carrier (14).

2.    A data carrier as claimed in claim 1, c h a r a c t e r i s e d in that the encryption module (15) is a logic network defining and performing the encryption of the encoded data.

3.    A data carrier as claimed in claim 2, c h a r a c t e r i s e d in that the encryption is defined as one or several mathematic algorithms or functions, preferably a division or a multiplication by a factor two.

4.    A data carrier as claimed in claim 1, c h a r a c t e r i s e d in that the encryption module on its input receives the data just read out and on its output transmits the encrypted data for storage in the memory (14) of the data carrier.

5.    A data carrier as claimed in claim 1, c h a r a c t e r i s e d by a power supply (12, 32)

15

being provided by the encryption module.

6.     A data carrier as claimed in claim 5, c h a-
r a c t e r i s e d  in that the power supply from
the encryption module comprises a voltage stabilizing circuit (32) and power-receiving means (31)
for receiving a power from a vending terminal (40,
50), into which the data carrier (30) is inserted.

7.     A data carrier according to claim 6, c h a-
r a c t e r i s e d  in that the power-receiving
means are a coil (31) surrounding a hole in the
data carrier, said hole being adapted to receive a
retainer means (37) forming part of the vending
terminal and being adapted to ensure the securing
of the data carrier in the vending terminal during
a data transaction, said retainer means (37) being
made of a magnetically conducting material and
forming part of a magnetic circuit, which is power
supplied by the vending terminal, when a data carrier is inserted into the vending machine.

8.     A data carrier as claimed in one or several
of the preceding claims, c h a r a c t e r i s e d
by being constructed as a card.

9.     A data carrier as claimed in one or several
of the preceding claims, c h a r a c t e r i s e d
by being constructed as a cylinder or as a key.

10.     A system comprising a vending terminal for a
data carrier as claimed in one or several of the
preceding claims, c h a r a c t e r i s e d  by
comprising retainer means (37) capable of supplying

16

power to the data carrier (30) and by comprising one or several encryption modules (3, 4, 5), in which the data read out from the data carrier is encrypted to provide data for the original information for further processing in data processing means in the system.

## Fig.1

30

## Fig.3

34

30

36

35   33   32

31

37

*Fig.2*

*Fig.6*

# Fig.4

CNE/WA chip-card concept
BLOCKDIAGRAM    *Fig.5*

1 card data

16

2 card command

data-type switch

3 post-processor

4 var. algorith generator

5 pre-processor

17 data-type switch

6 serial-link

8 capacitive receiver

7 converter (interface)

9 capacitive transmitter

20 inductive transmitter

10 capacitive transmitter

11 capacitive receiver

12 power supply

13 command decoder

18 data/command

14 non-volatile data-memory

19 data-type switch

15 logic-hw-processor

50 vending-machine

master-module

40 chip-card terminal

30 chip-card